# EUROPÄISCHE PATENTSCHRIFT

(11) **EP 2 439 012 B1**
(45) Veröffentlichungstag und Bekanntmachung des Hinweises auf die Patenterteilung: **27.03.2019**
(21) Anmeldenummer: 11007547.0
(22) Anmeldetag: 16.09.2011
(51) Int. Cl.: B23K 11/24

(54) **Verfahren und Vorrichtung zum Betreiben einer Widerstandschweissvorrichtung**
Method and device for operating a resistance welding device
Procédé et dispositif destinés au fonctionnement d'un dispositif de soudage par résistance

(30) Priorität: 09.10.2010 DE 102010048110
(43) Veröffentlichungstag der Anmeldung: 11.04.2012
(73) Patentinhaber: Robert Bosch GmbH, 70442 Stuttgart (DE)
(72) Erfinder: Scholz, Reinhard, 64711 Erbach (DE); Meister, Werner, 64385 Reichelsheim (DE)
(74) Vertreter: Thürer, Andreas

(56) Entgegenhaltungen:
- JP-A- S6 422 477
- JP-A- H02 207 981
- US-A- 5 237 147

## Beschreibung

Die vorliegende Erfindung betrifft ein Verfahren sowie eine Vorrichtung zum Betreiben einer Widerstandsschweißvorrichtung, insbesondere mittels eines (Einphasen-) Mittelfrequenz-Schweißtransformators, mit einem Transformatorkern und mit einer Primärwicklung und einer Sekundärwicklung.

Obwohl im Folgenden im wesentlichen auf Mittelfrequenz-Schweißtransformatoren Bezug genommen wird, ist die vorliegende Erfindung nicht darauf beschränkt.

Mittelfrequenz-Schweißtransformatoren werden seit einer gewissen Zeit bei Schweißverfahren eingesetzt. Sie werden üblicherweise von einem Inverter mit einer rechteckigen Wechselspannung gespeist. Der Transformator gibt an seiner Sekundärwicklung eine niedrige Spannung mit hohem Strom ab, die anschließend gleichgerichtet und für den Schweißvorgang verwendet wird. Die hohe Frequenz, mit der Mittelfrequenz-Transformatoren betrieben werden, ermöglicht eine effektive Energieumwandlung und damit das Verwenden eines relativ kleinen und leichten Transformators. Beim Betrieb treten allerdings Hysterese- bzw. Sättigungseffekte sowie Stromspitzen auf, die zum einen den Energietransfer beeinflussen und zum anderen bauteilschädigend wirken können.
Der Markt tendiert aus Gründen immer höherer Anforderungen an die erforderlichen Bauräume zu Entwicklung immer kleinerer Mittelfrequenztransformatoren. Beispielsweise werden Mittelfrequenz-transformatoren bei Schweißzangen für die Automobilindustrie eingesetzt. Damit man mittels einer Schweißzange auch sämtliche Teile einer Karosserie schweißen kann, muss diese so kompakt sein, dass sie auch an entlegene Winkel mittels eines Schweißroboters herangeführt werden kann. Da der Mittelfrequenztransformator einer Schweißzange wesentlich deren Abmessungen mitbestimmt, geht eine Verkleinerung der Schweißzangenabmessungen stets mit einer Verkleinerung des Mittelfrequenztransformators einher.

Das Volumen eines Transformators kann verringert werden, wenn man die Schaltfrequenz zur Ansteuerung des Transformators erhöht. Bei Erhöhung der Schaltfrequenz erhöhen sich jedoch wiederum die Schaltverluste bei der Ansteuerung der hierzu erforderlichen Halbleiterbauelemente mittels bekannter Pulsbreitenregelung.

Eine Pulsbreitenregelung ist z.B. der JPS6422477 A zu entnehmen.

Es stellt sich daher die Aufgabe ein Verfahren sowie eine Vorrichtung zum Betreiben einer Widerstandsschweißvorrichtung anzugeben, so dass die oben genannten Nachteile nicht auftreten. Die Erfindung liefert ein Verfahren zum Betrieb einer Widerstandsschweißvorrichtung mit einem Schweißtransformator, welcher eine erste und eine zweite miteinander gekoppelte Sekundärwicklung und eine Primärwicklung aufweist, wobei die Primärwicklung derart mittels von einer Ansteuervorrichtung erzeugten Ansteuerimpulsen angesteuert wird, dass eine regelmäßig wiederkehrende Änderung der an der Primärwicklung anliegenden Polarität der Gleichspannung resultiert.

Die Anzahl der Ansteuerimpulse für den Transformator wird während einer definierten Zeitdauer von der Ansteuervorrichtung variiert, ohne dass sich die Impulsbreite der Ansteuerimpulse außerhalb der üblichen schaltungsbedingten Toleranzen ändert. Damit wird es möglich, die von der Ansteuervorrichtung abgegebene Leistung zu steuern/regeln. Die Erfindung löst die Aufgabe demnach im Gegensatz zum Stand der Technik, dadurch dass die bekannte Pulsbreitenregelung durch eine Vielzahl von Einzelpulsen mit jeweils im wesentlichen konstanter Pulsbreite ersetzt wird, wobei die Ansteuervorrichtung die Anzahl der Impulse und auch die Länge der Impulspause aktiv regelt.

Die Ansteuerung des Mittelfrequenztransformators erfolgt somit nicht mehr durch eine Änderung der Pulsbreite, sondern mittels der Regelung der Anzahl vorhandener einzelner Ansteuerimpulse mit konstanter Impulsbreite für die Erzeugung einer am Primärteil des Transformator erforderlichen Wechselspannung. Es wurde festgestellt, dass hierdurch die Schaltverluste gegenüber der aus dem Stand der Technik bekannten Lösung reduziert werden können. Gegenüber der Pulsbreitenregelung ergibt sich bei' der höheren Frequenz bei fester Puls/Pause Regelung eine Reduzierung der Schaltvorgänge und damit die Reduzierung der Schaltverluste bei branchenüblicher Leistungsanforderung.

Durch diese neuartige Ansteuerung können nun kleinere und leichtere Transformatoren in Widerstandsschweißzangen verbaut werden, die dann auch weniger Magnetisierungsverluste auf Grund der geringeren Kerngröße und durch Einsatz von Kernmaterial haben, welches für die höheren Frequenzen optimiert ist. Geringere elektrische Widerstände durch die geringere Länge der Sekundärwicklung sind ebenfalls ein Vorteil der Erfindung. Durch die Erfindung können außerdem Umrichter mit höherer Schaltfrequenz verwendet werden.

Alles in allem werden mittels der Erfindung die Schaltverluste in den Umrichtern (IGBTs), im Trafokern und in den Schweißdioden reduziert. Auch ermöglicht die Erfindung den Einsatz von Transformatoren mit geringerem Gewicht und geringerem Volumen.

Alternativ könnte auch eine Pulsbreitenregelung vorgesehen werden, wobei die Pulsbreite zur Steuerung/Regelung der abgegebenen Leistung mittels der Ansteuervorrichtung während des Schweißbetriebs variiert wird und wobei der Puls nicht mittels eines einzigen durchgehenden Spannungspegels, sondern mittels einer Vielzahl von aneinandergereihten Einzelimpulsen realisiert wird, deren Impulsbreite wiederum trafospezifisch wie weiter unten noch beschrieben vor dem eigentlichen Betrieb ermittelt wird und während des Betriebs im wesentlichen konstant bleibt.

Bevorzugt erfolgt die Ansteuerung mittels eines von der Ansteuervorrichtung umfassten integrierten Schaltkreises derart, dass die Ansteuervorrichtung die Impulsbreite der Ansteuerimpulse aus der Periodendauer eines Ansteuertaktes für den integrierten Schaltkreis ableitet. Die Impulsbreite der Ansteuerimpulse kann somit einer n-fachen Dauer der Periode des Ansteuertaktes entsprechen, wobei n alle ganzen Zahlen umfassen kann. Auch kann die Zeitdauer einer n-fachen Dauer der Periode des Ansteuertaktes entsprechen, wobei n erneut alle ganzen Zahlen umfassen kann.

Dies bedeutet in der Praxis, dass die Grundfrequenz, mit der die Ansteuervorrichtung betrieben/getaktet wird, zur Erzeugung der Impulsbreite und der Impulsperiode der Ansteuerimpulse herangezogen wird. Damit wird es möglich die Impulse und deren Feinjustierung zu implementieren. Die Genauigkeit ist dabei lediglich durch die Grundfrequenz limitiert. Außerdem reduziert diese Lösung den schaltungstechnischen Aufwand, weil keine weiteren Taktgeneratoren implementiert werden müssen.

Bevorzugt ermittelt die Ansteuervorrichtung während einer dem Schweißbetrieb vorausgehenden Initialisierungsphase die für den nachfolgenden Schweißbetrieb verwendete Impulsbreite der Ansteuerimpulse unter Berücksichtigung der im Schweißtransformator auftretenden magnetischen Flussdichte. Hierdurch kann sich die Ansteuervorrichtung (z.B. Umrichter) an unterschiedliche Transformatoren und Netzspannungen bezüglich der erzeugten Ansteuerimpulse selbsttätig anpassen. Beispielsweise wird bei höherer Netzspannung die Schaltfrequenz für die Transformatoren erhöht, da sich bei erhöhter Spannung die Spannungs-/Zeitfläche verringert und da die sich die Spannungs-/Zeitfläche proportional zur Magnetisierung verhält und sich so auch auf die magnetische Sättigung im Transformatorkern auswirkt. Die im Schweißtransformator auftretende magnetische Flussdichte wird von der Ansteuervorrichtung messtechnisch erfasst und verarbeitet.

Diese messtechnische Erfassung kann derart realisiert werden, dass während der Initialisierungsphase der Primärstrom oder mittels eines Flussdichtesensors die magnetische Flussdichte kontinuierlich gemessen und überwacht wird. Einfacher ist die Messung des Primärstromes zu realisieren.

Die Erfindung gibt auch eine Widerstandsschweißvorrichtung an. Diese umfasst einem Schweißtransformator, welcher eine erste und eine zweite miteinander gekoppelte Sekundärwicklung und eine Primärwicklung aufweist. Die Primärwicklung ist derart ansteuerbar, dass eine während des Schweißbetriebs regelmäßig wiederkehrende Änderung der an der Primärwicklung anliegenden Polarität der Gleichspannung realisierbar ist. Die Ansteuervorrichtung ist derart realisiert, dass die Anzahl der Ansteuerimpulse während einer definierten Zeitdauer variabel einstellbar ist. Die Impulsbreite der Ansteuerimpulse kann gezielt verändert werden. Alle damit verbundenen Vorteile wurden bereits weiter oben bei der Erläuterung des Verfahrens genannt und treffen auch auf die Widerstandschweißvorrichtung zu.

Weitere Vorteile und Ausgestaltungen der Erfindung ergeben sich aus der Beschreibung und den Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.
Figur 1 zeigt eine schematische Ansicht eines Mittelfrequenz-Schweißtransformators mit Gleichrichter und Umrichter;
Figur 2 zeigt erfindungsgemäße Ansteuerimpulse
Figur 3 zeigt die Initialisierungsphase
Figur 4 zeigt die Verläufe von Up und Ip (aus Figur 1 bekannt)

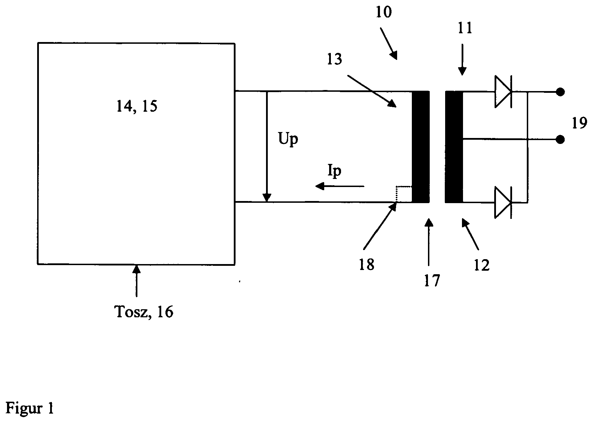

In Figur 1 ist ein Mittelfrequenz-Schweißtransformator mit Gleichrichter und Umrichter schematisch dargestellt und insgesamt mit 10 bezeichnet. Die Anordnung 10 lässt sich in verschiedene Bestandteile unterteilen. Sie weist einen Primärkreis 13 und einen Sekundärkreis 11, 12 auf, die über einen Transformator 17 miteinander derart verbunden sind, dass ein gemeinsamer magnetischer Fluss innerhalb der Wicklungen des Primärkreises 13 und des Sekundärkreises 11, 12 auftritt. Die Primärwicklung 13 des Transformators 17 mit einer Windungszahl N₁ ist in den Primärkreis und die Sekundärwicklungen 11, 12 des Transformators 17 mit jeweils einer Windungszahl N₂ + N₃ sind in den Sekundärkreis geschaltet. Der Transformator 17 weist weiterhin einen Transformatorkern auf, welcher hier jedoch zugunsten der Übersichtlichkeit nicht gezeigt ist.

Im Sekundärkreis 11,12 ist ein Ausgangsbereich mit 19 bezeichnet, an den Schweißelektroden anschließbar sind. Im Primärkreis ist eine Ansteuervorrichtung 14 mit Spannungsquelle Up und integriertem Schaltkreis 15 vorgesehen, die den Primärkreis mit einer Wechselspannung versorgen kann.

Der Sekundärkreis 11,12 umfasst einen Gleichrichter, was zu einem im wesentlichen kontinuierlichen Laststromverlauf am Anschlusspunkt 19 führt, sofern dieser mit einer Last beaufschlagt wird, bspw. einem zu schweißenden Werkstück.

Der integrierte Schaltkreis 15 der Ansteuervorrichtung 14 wird mittels einer Oszillatorfrequent Tosc, 16 angesteuert, welche als Grundfrequenz auch zur Erzeugung der Ansteuerimpulse von der Ansteuervorrichtung 14 verwendet wird. Mittels eines Sensors 18, kann die magnetische Feldstärke im Transformator erfasst werden.

Die rechteckigen Ansteuerimpulse Up am primärseitigen Eingang des Transformators verursachen einen dreieckförmigen Magnetisierungsstrom im Transformator, der näherungsweise unabhängig vom Sekundärstrom ist. Der Magnetisierungsstrom ist in etwa proportional zum magnetischen Fluss bzw. zur magnetischen Flussdichte. Die magnetische Flussdichte im Transformatorkern wird auch durch die Eingangsspannung bestimmt.

Im Primärkreis 13 tritt der Primärkreisstrom Ip auf, welcher messtechnisch von der Ansteuervorrichtung 14 erfasst und zur Formung der Ansteuerimpulse verarbeitet wird, so dass die Ansteuervorrichtung während einer dem eigentlichen Schweißbetrieb vorausgehenden Initialisierungsphase die für den nachfolgenden Schweißbetrieb verwendete Impulsbreite der Ansteuerimpulse unter Berücksichtigung der im Schweißtransformator 17 auftretenden magnetischen Flussdichte ermitteln und die Ansteuerimpulse auf den verwendeten Mittelfrequenztransformator optimieren kann. Dieser wird dann während des Schweißbetriebs stets nur so mittels der Ansteuervorrichtung 14, 15 angesteuert, so dass dieser sowohl bezüglich der Schaltverluste als auch bezüglich der Magnetisierungsverluste stets optimal betrieben werden kann. Das erfindungsgemäße Verfahren passt sich daher vollautomatisch an die verwendete Hardware (z.B. Umrichter) an und eignet sich auch zur Nachrüstung von bereits vorhandenen Anlagen.

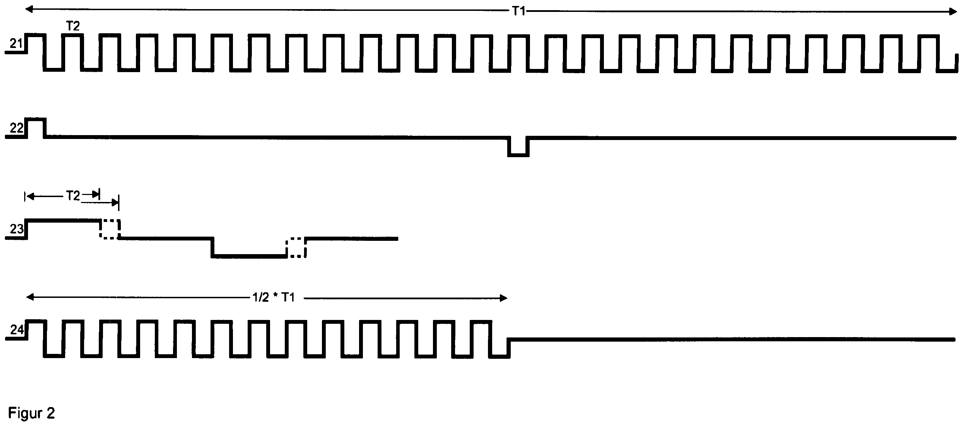

Figur 2 zeigt die erfindungsgemäßen Ansteuerimpulse 21, 22, 23, 24 der Ausgangsspannung Up einer Ansteuervorrichtung in Form eines Umrichters, welche mit einem Mittelfrequenztransformator primärseitig verbunden ist.

Es handelt sich lediglich um eine beispielhaft aufgeführte Auswahl aus einer Vielzahl von möglichen Ansteuersignalverläufen zur Beeinflussung der Leistungsabgabe des Transformators.

Bezugszeichen 21 zeigt eine volle Periode T1 der Ansteuersignale bei maximaler sekundärseitiger Ausgangsleistung des Mittelfrequenztransformators. Bezugszeichen 22 zeigt eine volle Periode T1 der Ansteuersignale bei minimaler sekundärseitiger Ausgangsleistung des Mittelfrequenztransformators. Die Impulse erstrecken sich über die Periode T1 und weisen sowohl negative also auch positive Anteile bezüglich der Polarität auf. Dies vermeidet, dass der Transformator in eine magnetische Sättigung gerät.

Bezugszeichen 23 zeigt die Ansteuersignale während einer von der Ansteuervorrichtung vorgenommenen Feineinstellungsphase der Impulsbreiten T2 vorzugsweise vor dem eigentlichen Schweißbetrieb. Die Impulsbreite T2 ist während des Schweißbetriebs im Rahmen der üblichen Toleranzen im wesentlichen fest eingestellt, kann jedoch innerhalb eines vorgebbaren Rahmen automatisch oder manuell vor Aufnahme des eigentlichen Schweißbetriebs von der Ansteuervorrichtung justiert werden. Der gepunktete Bereich zeigt den Zeitraum, innerhalb dessen die Feineinstellung unter Berücksichtigung der Periode der für den Umrichter verwendeten Grundfrequenz (Ansteuertakt) eingestellt wird.

Bezugszeichen 24 zeigt eine volle Periode T1 der Ansteuersignale bei lediglich 50%iger sekundärseitiger Ausgangsleistung des Mittelfrequenztransformators. Die Zeitdauer T1 wird hierbei nur Teilweise (hier 50%) mit Impulsen belegt, die restliche Zeit befindet sich das Signal in einem bezüglich der Polarität neutralen Zustand.

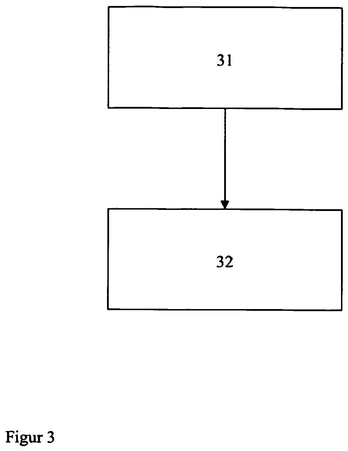

Figur 3 zeigt, daß die Ansteuervorrichtung während einer dem eigentlichen Schweißbetrieb 32 vorausgehenden Initialisierungsphase 31 oder Einlernschweißung 31 die für den nachfolgenden Schweißbetrieb 32 verwendete Impulsbreite der Ansteuerimpulse unter Berücksichtigung der im Schweißtransformator auftretenden magnetischen Flussdichte innerhalb der zuvor erwähnten Feinjustierungsphase ermitteln kann. Im Rahmen der Einlernschweißung wird ein Satz von Spannungsblöcken (z.B. 4 Spannungsblöcke) der höchsten Frequenz bzw. der kleinsten Pulsbreite auf den Trafo gegeben. Die Spannungsblöcke sind so ausgelegt, das der Trafo nach der Beaufschlagung mit den Spannungsblöcken ohne Restmagnetisierung verbleibt. Der Umrichter erhöht automatisch die Pulsbreite (bzw. erniedrigt die Frequenz) für den nächsten Satz Spannungsblöcke, bis eine Sättigungsspitze im Strom gemessen wird. Die jeweils niedrigere Pulsbreite bzw. höhere Frequenz wird dann als trafospezifischer Initialisierungswert abgelegt. Die Ablage erfolgt in Form eines Parameters im Speicherbereich einer Schweißsteuerung. Alternativ kann die Sättigungsmessung auch mittels eines Magnetfeldsensors erfolgen.

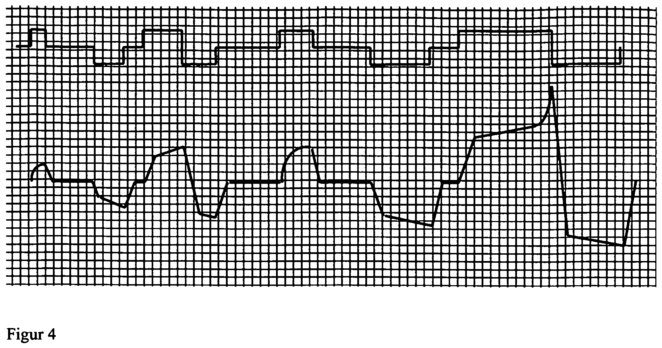

Die bei der Einlernschweißung auftretenden Effekte werden in Figur 4 gezeigt. Die Kurven zeigen den Stromverlauf Ip im Primärkreis, und die Ausgangsspannung Up der Ansteuervorrichtung (z.B. Umrichter).

## Patentansprüche

1. Verfahren zum Betrieb einer Widerstandsschweißvorrichtung mit einem Schweißtransformator (10), welcher eine Primärwicklung (13) und eine Sekundärwicklung (11, 12) mit Mittelabgriff (19) aufweist, wobei die Primärwicklung (13) derart mittels von einer Ansteuervorrichtung (14) erzeugten Ansteuerimpulsen angesteuert wird, dass innerhalb einer vordefinierten Zeitdauer (T1) eine regelmäßig wiederkehrende Änderung der Polarität der an der Primärwicklung (13) anliegenden Gleichspannung (Up) resultiert,
**dadurch gekennzeichnet, dass**
von der Ansteuervorrichtung (14) für die vordefinierte Zeitdauer (T1) Ansteuerimpulse (21) mit vorzugsweise abwechselnder positiver und negativer Polarität erzeugt werden, wobei die Anzahl der Ansteuerimpulse (21) innerhalb der vordefinierten Zeitdauer (T1) mittels der Ansteuervorrichtung (14) veränderbar ist und wobei die Impulsbreite (T2) der Ansteuerimpulse (21) während des Schweißbetriebs im Rahmen der üblichen Toleranzen von der Ansteuervorrichtung (14) konstant gehalten wird.

2. Verfahren gemäß Anspruch 1, wobei die Ansteuerung mittels eines von der Ansteuervorrichtung (14) umfassten integrierten Schaltkreises (15) derart erfolgt, dass die Impulsbreite (T2) der Ansteuerimpulse (21) aus der Periodendauer (Tosz) eines Ansteuertaktes (16) für den integrierten Schaltkreis (15) abgeleitet wird.

3. Verfahren gemäß Anspruch 2, wobei die Impulsbreite (T2) der Ansteuerimpulse (21) einer n-fachen Dauer der Periode (Tosz) des Ansteuertaktes (16) entspricht, wobei n alle ganzen Zahlen umfassen kann.

4. Verfahren gemäß einem der vorhergehenden Ansprüche, wobei die Zeitdauer (T1) einer n-fachen Dauer der Periode (Tosz) des Ansteuertaktes (16) entspricht, wobei n alle ganzen Zahlen umfassen kann.

5. Verfahren gemäß einem der vorhergehenden Ansprüche, wobei die Ansteuervorrichtung (14) während einer dem Schweißbetrieb (32) vorausgehenden Initialisierungsphase (31) die für den nachfolgenden Schweißbetrieb (32) verwendete Impulsbreite (T2) der Ansteuerimpulse (21) unter Berücksichtigung der im Schweißtransformator (17) auftretenden magnetischen Flussdichte ermittelt.

6. Verfahren gemäß Anspruch 5, wobei die im Schweißtransformator (17) auftretende magnetische Flussdichte vorzugsweise mittels eines Flussdichtesensors (18) erfasst wird.

7. Verfahren gemäß einem der vorhergehenden Ansprüche 5 oder 6, wobei der in der Primärwicklung (13) des Schweißtransformators (17) auftretende Strom (Ip) gemessen und bezüglich zulässiger Schwellwerte überwacht wird.

8. Widerstandsschweißvorrichtung mit einem Schweißtransformator (10), welcher eine Primärwicklung (13) und eine Sekundärwicklung (11, 12) mit Mittelabgriff und aufweist, wobei die Primärwicklung (13) derart mittels von einer Ansteuervorrichtung (14) erzeugten Ansteuerimpulsen ansteuerbar ist, dass innerhalb einer vordefinierten Zeitdauer (T1) eine regelmäßig wiederkehrende Änderung der Polarität der an der Primärwicklung (13) anliegenden Gleichspannung (Up) daraus resultiert,
**dadurch gekennzeichnet, dass**
die Ansteuervorrichtung (14) derart realisiert ist, dass für die vordefinierte Zeitdauer (T1) Ansteuerimpulse (21) mit vorzugsweise abwechselnder positiver und negativer Polarität erzeugt werden können, wobei die Anzahl der Ansteuerimpulse (21) innerhalb der vordefinierten Zeitdauer (T1) mittels der Ansteuervorrichtung (14) veränderbar ist und wobei die Impulsbreite (T2) der Ansteuerimpulse (21) während des Schweißbetriebs im Rahmen der üblichen Toleranzen von der Ansteuervorrichtung (14) konstant bleibt.

## Claims

1. Method for operating a resistance welding device with a welding transformer (10), which has a primary winding (13) and a secondary winding (11, 12) with a centre tap (19), the primary winding (13) being activated by means of activation pulses generated by an activation device (14) in such a way as to result in a regularly recurring change of the polarity of the direct voltage (Up) present across the primary winding (13) within a predefined time period (T1),
**characterized in that**
activation pulses (21) with preferably alternating positive and negative polarity are generated by the activation device (14) for the predefined time period (T1), the number of activation pulses (21) within the predefined time period (T1) being variable by means of the activation device (14) and the pulse width (T2) of the activation pulses (21) being kept constant during the welding operation within the usual tolerances of the activation device (14).

2. Method according to Claim 1, the activation being performed by means of an integrated circuit (15) comprised by the activation device (14) in such a way that the pulse width (T2) of the activation pulses (21) is derived from the duration of the period (Tosz) of an activation clock (16) for the integrated circuit (15).

3. Method according to Claim 2, the pulse width (T2) of the activation pulses (21) corresponding to a duration that is n times the period (Tosz) of the activation clock (16), where n may comprise all whole numbers.

4. Method according to one of the preceding claims, the time period (T1) corresponding to a duration that is n times the period (Tosz) of the activation clock (16), where n may comprise all whole numbers.

5. Method according to one of the preceding claims, the activation device (14) determining during an initialization phase (31), which precedes the welding operation (32), the pulse width (T2) of the activation pulses (21) that is used for the subsequent welding operation (32) while taking into account the magnetic flux density occurring in the welding transformer (17).

6. Method according to Claim 5, the magnetic flux density occurring in the welding transformer (17) preferably being detected by means of a flux density sensor (18).

7. Method according to either of the preceding Claims 5 and 6, the current (Ip) occurring in the primary winding (13) of the welding transformer (17) being measured and monitored with respect to permissible threshold values.

8. Resistance welding device with a welding transformer (10), which has a primary winding (13) and a secondary winding (11, 12) with a centre tap, the primary winding (13) being activatable by means of activation pulses generated by an activation device (14) in such a way as to result in a regularly recurring change of the polarity of the direct voltage (Up) present across the primary winding (13) within a predefined time period (T1),
**characterized in that**
the activation device (14) is realized in such a way that activation pulses (21) with preferably alternating positive and negative polarity can be generated for the defined time period (T1), the number of activation pulses (21) within the predefined time period (T1) being variable by means of the activation device (14) and the pulse width (T2) of the activation pulses (21) remaining constant during the welding operation within the usual tolerances of the activation device (14).

## Revendications

1. Procédé de fonctionnement d'un dispositif de soudage par résistance comprenant un transformateur de soudage (10) qui comporte un enroulement primaire (13) et un enroulement secondaire (11, 12) pourvu d'une prise centrale (19), l'enroulement primaire (13) étant excité au moyen d'impulsions d'excitation générées par un dispositif d'excitation (14) de telle sorte qu'il résulte, dans un intervalle de temps prédéfini (T1), une modification récurrente de la polarité de la tension continue (Up) appliquée aux bornes de l'enroulement primaire (13),
**caractérisé en ce que**
des impulsions d'excitation (21) de polarités positive et négative de préférence alternées sont générées par le dispositif d'excitation (14) pendant l'intervalle de temps prédéfini (T1), le nombre d'impulsions d'excitation (21) dans l'intervalle de temps prédéfini (T1) pouvant être modifié au moyen du dispositif d'excitation (14) et la largeur d'impulsion (T2) des impulsions d'excitation (21) étant maintenue constante dans les tolérances habituelles du dispositif d'excitation (14) pendant l'opération de soudage.

2. Procédé selon la revendication 1, **caractérisé en ce que** l'excitation est réalisée au moyen d'un circuit intégré (15) inclus dans dispositif d'excitation (14) de telle sorte que la largeur d'impulsion (T2) des impulsions d'excitation (21) est dérivée de la durée (Tosz) d'une horloge d'excitation (16) pour le circuit intégré (15).

3. Procédé selon la revendication 2, la largeur d'impulsion (T2) des impulsions d'excitation (21) correspondant à n fois la durée (Tosz) de l'horloge d'excitation (16), n pouvant inclure tous les entiers.

4. Procédé selon l'une des revendications précédentes, la durée (T1) correspondant à une durée (Tosz) de l'horloge d'excitation (16), n pouvant inclure tous les entiers.

5. Procédé selon l'une des revendications précédentes, le dispositif d'excitation (14) déterminant, lors d'une phase d'initialisation (31) précédant l'opération de soudage (32), la largeur d'impulsion (T2) des impulsions d'excitation (21), qui est utilisée pour l'opération de soudage ultérieure (32), avec prise en compte de la densité de flux magnétique dans le transformateur de soudage (17).

6. Procédé selon la revendication 5, la densité de flux magnétique dans le transformateur de soudage (17) étant détectée de préférence au moyen d'un capteur de densité de flux (18).

7. Procédé selon l'une des revendications précédentes 5 et 6, le courant (Ip) dans l'enroulement primaire (13) du transformateur de soudage (17) étant mesuré et surveillé en termes de valeurs seuils admissibles.

8. Dispositif de soudage par résistance comprenant un transformateur de soudage (10) qui comporte un enroulement primaire (13) et un enroulement secondaire (11, 12) pourvu d'une prise centrale, l'enroulement primaire (13) pouvant être excité au moyen d'impulsions d'excitation générées par un dispositif d'excitation (14) de telle sorte qu'il résulte, dans un intervalle de temps prédéfini (T1), une modification récurrente de la polarité de la tension continue (Up) appliquée aux bornes de l'enroulement primaire (13),
**caractérisé en ce que**
le dispositif d'excitation (14) est conçu de manière à pouvoir générer des impulsions d'excitation (21) de polarités positive et négative de préférence alternées pendant l'intervalle de temps prédéfini (T1), le nombre d'impulsions d'excitation (21) dans l'intervalle de temps prédéfini (T1) pouvant être modifié au moyen du dispositif d'excitation (14) et la largeur d'impulsion (T2) des impulsions d'excitation (21) restant constante dans les tolérances habituelles du dispositif d'excitation (14) pendant l'opération de soudage.
